(19) Europäisches Patentamt
European Patent Office
Office européen des brevets

(11) **EP 4 782 302 A1**

(12) **EUROPEAN PATENT APPLICATION**
published in accordance with Art. 153(4) EPC

(43) Date of publication:
29.07.2026 Bulletin 2026/31

(21) Application number: 24938114.6

(22) Date of filing: 26.11.2024

(51) International Patent Classification (IPC):
**B61L 23/00** (2006.01)    **B61L 27/40** (2022.01)
**B61B 13/10** (2006.01)

(52) Cooperative Patent Classification (CPC):
Y02T 30/00

(86) International application number:
**PCT/CN2024/134648**

(87) International publication number:
**WO 2026/060818 (26.03.2026 Gazette 2026/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 19.09.2024  CN 202411303570

(71) Applicant: CRSC RESEARCH & DESIGN
INSTITUTE GROUP CO., LTD.
**Fengtai District
Beijing
100070 (CN)**

(72) Inventors:
• **YAO, Wenhua
Beijing 100070 (CN)**

• **CUI, Junfeng
Beijing 100070 (CN)**
• **JIA, Yunguang
Beijing 100070 (CN)**
• **LIU, Ling
Beijing 100070 (CN)**
• **QU, Bo
Beijing 100070 (CN)**
• **TANG, Zhao
Beijing 100070 (CN)**

(74) Representative: **Meissner Bolte Partnerschaft
mbB
Patentanwälte Rechtsanwälte
Postfach 86 06 24
81633 München (DE)**

(54) **METHOD AND SYSTEM FOR CONTROLLING GATE VALVE OF LOW-VACUUM TUBE TRANSPORTATION SYSTEM**

(57)    The present invention discloses a control method and system for a gate valve of a low-vacuum pipeline transportation system. The control method includes: acquiring position information, speed information, and a traction speed curve of a train, when a gate lowering request is acquired; determining a predicted stopping area according to the position information, the speed information, and the traction speed curve; and issuing a gate valve action command according to a positional relationship between the predicted stopping area and a risk area; where the risk area refers to an area where collision with the train occurs when the gate valve is opened to control a gate to lower. According to the above technical solution, whether the train will stop in the risk area before the gate is lowered is determined, and the gate is controlled to lower only when the stopping area is outside the risk area. This can effectively prevent the gate from striking the train, reduce occurrence of safety accidents, and improve safety of rail transit.

FIG. 1

## Description

### TECHNICAL FIELD

The present invention relates to the technical field of rail transit, and in particular to a control method and system for a gate valve of a low-vacuum pipeline transportation system.

### BACKGROUND ART

Restricted by factors such as air resistance, wheel-rail adhesion, and pantograph-catenary current collection, traditional wheel-rail rail transit can hardly exceed 500 km/h. Maglev technology can solve the problem of wheel-rail adhesion, but with the continuous increase of speed, problems such as train air resistance (positively correlated with the square of speed) and noise (positively correlated with the 6th to 8th power of speed) cannot be solved.

A low-vacuum pipeline maglev transportation system refers to creating a low-pressure environment inside a closed pipeline. The train runs at high speed in the low-pressure pipeline, which can effectively reduce the running resistance of the train and isolate the noise transmission between the inside and outside of the pipeline. At the same time, maglev technology is used to realize the suspension and traction of the train to reduce the frictional resistance between the train and the track as well as the impact between the train and the track, so that the running speed of the train can exceed 1000 km/h.

The low-vacuum pipeline system is equipped with monitoring and control systems to monitor the pipeline vacuum level and supervise facilities such as pumps and valves. In emergency situations, passengers need to evacuate inside the pipeline, and direct exposure of the human body to a low-vacuum environment is unsafe. With reference to research findings in the aviation field, the safe air pressure range for human body functions is 70.1-50.7 kPa, which is equivalent to an altitude of 3000-5500 meters. That is, the minimum pipeline air pressure required to ensure the safe evacuation of passengers must not be lower than 50.7 kPa. Therefore, in emergency situations, it is necessary to quickly break the low-vacuum state of the pipeline (referred to as "vacuum breaking"). At this time, the baffle valve for vacuum breaking and pressure recovery in the vacuum pump station is opened, and the pressure difference between the outside and the inside of the pipeline is utilized to achieve rapid vacuum breaking. Moreover, the gate valve is controlled to lower the gate for passenger evacuation.

In the prior art, there are no effective measures to determine whether the train will enter a risk area when the gate is lowered, and therefore the gate may strike the train.

## SUMMARY

The present invention provides a control method and system for a gate valve of a low-vacuum pipeline transportation system, so as to solve the problem that the gate may strike the train due to the lack of safety determination before the gate is lowered in the low-vacuum pipeline transportation system.

According to one aspect of the present invention, a control method for a gate valve of a low-vacuum pipeline transportation system is provided, including:

acquiring position information, speed information, and a traction speed curve of a train, when a gate lowering request is acquired;

determining a predicted stopping area according to the position information, the speed information, and the traction speed curve; and

issuing a gate valve action command according to a positional relationship between the predicted stopping area and a risk area;

where the risk area refers to an area where collision with the train occurs when the gate valve is opened to control a gate to lower.

Optionally, before the acquiring position information, speed information, and a traction speed curve of a train, when a gate lowering request is acquired, the method further includes:
acquiring a front endpoint and a rear endpoint of the risk area, and a direction from the front endpoint to the rear endpoint is a running direction of the train.

Optionally, acquiring the traction speed curve includes:

acquiring a movement authority end point of the train;

when the train is at the stopping authority end point and a rear of the train has passed the rear endpoint, acquiring a maximum speed limit curve according to the movement authority end point, the speed information, the position information, and braking performance of the train;

sending the maximum speed limit curve, the position information, line data, and train data to a traction system; and

receiving the traction speed curve calculated by the traction system based on the maximum speed limit curve, the position information, the line data, and the train data.

Optionally, the issuing a gate valve action command according to a positional relationship between the predicted stopping area and a risk area includes:

when the train is in the predicted stopping area and a front of the train and/or a rear of the train is located between the front endpoint and the rear endpoint, issuing a gate valve closing command to control the gate to lift; and

when the train is in the predicted stopping area and the front of the train is located on a side of the front endpoint away from the rear endpoint, the front of the train reaches the front endpoint, the rear of the train reaches the rear endpoint, or the rear of the train has passed the rear endpoint, issuing a gate valve opening command to control the gate to lower.

Optionally, the acquiring a front endpoint and a rear endpoint of the risk area includes:

determining a first preset distance;

taking a point along a first direction at a first preset distance from a gate position as the front endpoint; where the first direction refers to a direction from a front of the train to a rear of the train;

determining a second preset distance; and

taking a point along a second direction at a second preset distance from the gate position as the rear endpoint; where the second direction refers to a direction from the rear of the train to the front of the train;

where the first preset distance is less than the second preset distance.

Optionally, the determining a first preset distance includes:
taking a preset safety distance between the front of the train and the gate when the train stops as the first preset distance.

Optionally, the determining a second preset distance includes:

acquiring a maximum running speed and a braking acceleration of the train; and

determining the second preset distance according to the maximum running speed and the braking acceleration of the train.

According to another aspect of the present invention, a control system for a gate valve of a low-vacuum pipeline transportation system is provided, including: an on-board operation control system, a section operation control system, a low-vacuum detection system, and a traction system;

where the section operation control system is connected to the on-board operation control system, the low-vacuum detection system, and the traction system, respectively; the section operation control system is configured to acquire position information, speed information, and a traction speed curve of a train when a gate lowering request is acquired; and is configured to determine a predicted stopping area according to the position information, the speed information, and the traction speed curve; and is further configured to issue a gate valve action command according to a positional relationship between the predicted stopping area and a risk area.

Optionally, the control system further includes: a gate valve;
where the low-vacuum detection system is connected to the section operation control system and the gate valve, respectively, and the low-vacuum detection system is configured to receive the gate valve action command issued by the section operation control system and output a control signal to the gate valve according to the gate valve action command to control opening and closing of the gate valve.

Optionally, the control system further includes: an on-board positioning device;
where the on-board operation control system is connected to the on-board positioning device and the section operation control system, respectively, and the on-board operation control system is configured to receive the position information and the speed information acquired by the on-board positioning device and send the position information and the speed information to the section operation control system.

In an embodiment of the present invention, position information, speed information, and a traction speed curve of the train are acquired, when a gate lowering request is acquired; and a predicted stopping area is determined according to the position information, the speed information, and the traction speed curve; and a gate valve action command is issued further according to a positional relationship between the predicted stopping area and a risk area. According to the above technical solution, whether the train will stop in the risk area before the gate is lowered is determined, and the gate is controlled to lower only when the stopping area is outside the risk area. This can effectively prevent the gate from striking the train, reduce occurrence of safety accidents, and improve safety of rail transit.

It should be understood that the content described in this section is not intended to identify key or essential features of the embodiments of the present invention, nor is it intended to limit the scope of the present invention. Other features of the present invention will be easily understood through the following specification.

## BRIEF DESCRIPTION OF THE DRAWINGS

To illustrate the technical solutions in the embodiments of the present invention more clearly, the following briefly introduces the drawings required for describing the embodiments. It is obvious that the drawings in the following description show some embodiments of the present invention, and a person of ordinary skill in the art may still derive other drawings from these drawings without creative efforts.

FIG. 1 is a flow chart of a first control method for a gate valve of a low-vacuum pipeline transportation system provided according to an embodiment of the present invention;

FIG. 2 is a flow chart of a second control method for a gate valve of a low-vacuum pipeline transportation system provided according to an embodiment of the present invention;

FIG. 3 is a diagram of a first train running and braking process provided according to an embodiment of the present invention;

FIG. 4 is a flow chart of a third control method for a gate valve of a low-vacuum pipeline transportation system provided according to an embodiment of the present invention;

FIG. 5 is a diagram of a second train running and braking process provided according to an embodiment of the present invention;

FIG. 6 is a flow chart of a fourth control method for a gate valve of a low-vacuum pipeline transportation system provided according to an embodiment of the present invention;

FIG. 7 is a flow chart of a fifth control method for a gate valve of a low-vacuum pipeline transportation system provided according to an embodiment of the present invention;

FIG. 8 is a structural schematic diagram of a first control system for a gate valve of a low-vacuum pipeline transportation system provided according to an embodiment of the present invention;

FIG. 9 is a structural schematic diagram of a second control system for a gate valve of a low-vacuum pipeline transportation system provided according to an embodiment of the present invention; and

FIG. 10 is a structural schematic diagram of a third control system for a gate valve of a low-vacuum pipeline transportation system provided according to an embodiment of the present invention.

## DETAILED DESCRIPTION

To enable those skilled in the art to better understand the solutions of the present invention, the technical solutions in the embodiments of the present invention will be described clearly and completely below in conjunction with the drawings in the embodiments of the present invention. Obviously, the described embodiments are only a part of the embodiments of the present invention, but not all of the embodiments. Based on the embodiments in the present invention, all other embodiments obtained by those of ordinary skill in the art without making creative efforts shall fall within the scope of protection of the present invention.

It should be noted that the terms "first", "second", etc. in the specification, claims, and above drawings of the present invention are used to distinguish similar objects and not necessarily to describe a specific order or sequence. It should be understood that the data used in this manner may be interchanged under appropriate circumstances so that the embodiments of the present invention described herein can be implemented in sequences other than those illustrated or described herein. In addition, the terms "include", "have", and any variations are intended to cover non-exclusive inclusion. For example, a process, method, system, product, or device that includes a series of steps or units is not necessarily limited to those clearly listed steps or units, but may include other steps or units not clearly listed or inherent to such a process, method, product, or device.

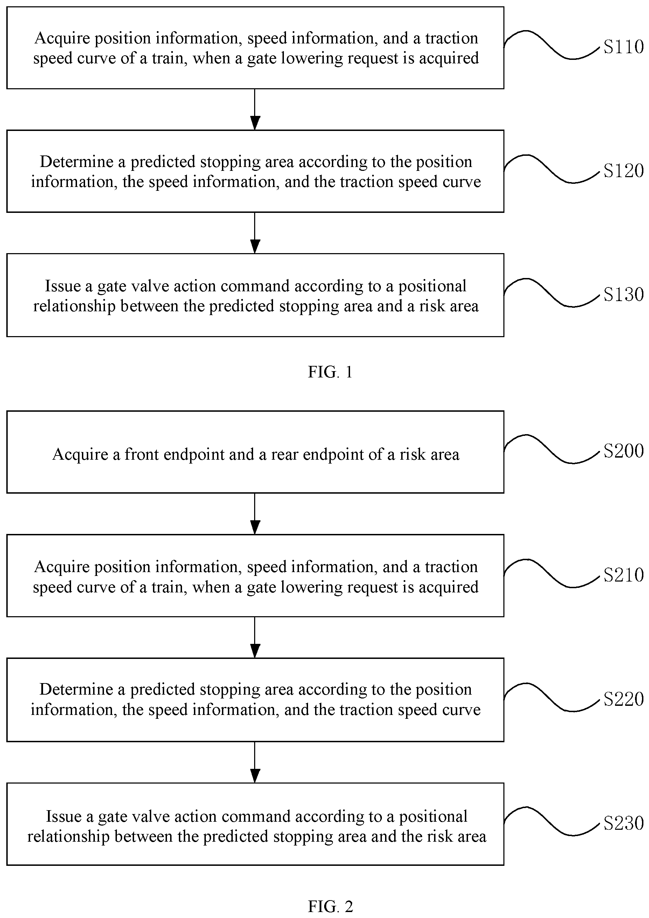

FIG. 1 is a flow chart of a first control method for a gate valve of a low-vacuum pipeline transportation system provided according to an embodiment of the present invention. This embodiment is applicable to situations where the lowering gate in a low-vacuum pipeline transportation system may strike the train. As shown in FIG. 1, the method includes:
S110, acquiring position information, speed information, and a traction speed curve of a train, when a gate lowering request is acquired.

Specifically, the low-vacuum pipeline transportation system includes an on-board operation control system, a section operation control system, a low-vacuum detection system, and a traction system. It should be noted that low vacuum refers to a vacuum state where the gas pressure ranges from $10^5$ to $10^2$ Pascals (Pa). In emergency situations, passengers need to evacuate inside the pipeline. At this time, it is necessary to open the gate valve to control the lowering of the gate, break the vacuum state, and then evacuate the passengers. To ensure that the gate does not strike a running train when lowered, the low-vacuum detection system must first send a gate lowering request to the section operation control system, and can only operate the gate to lower after receiving the gate valve opening command from the section operation control system. When the section operation control system acquires the gate lowering request, it acquires the position information and speed information of the train under its current state through the on-board operation control system, and then acquires the traction speed curve through the traction system. The traction speed curve refers to a relation curve describing the variation of train traction force with speed, which is drawn by comprehensively considering the braking and traction characteristics of the train.

S120. determining a predicted stopping area according to the position information, the speed information, and the traction speed curve.

Further, after acquiring the position information, speed information, and traction speed curve, the section operation control system can predict the area where the vehicle may stop (i.e., the predicted stopping area) through a function model according to the above information.

S130. issuing a gate valve action command according to a positional relationship between the predicted stopping area and a risk area.

The risk area refers to an area where collision with the train occurs when the gate valve is opened to control the gate to lower. The section operation control system compares the stopping area with the risk area to determine whether there is an overlap, and issues a gate valve action command according to the overlap situation. The gate valve action command includes a gate valve opening command and a gate valve closing command. When the gate valve is opened, the gate is lowered; conversely, when the gate valve is closed, the gate is lifted. Exemplarily, if the section operation control system determines that there is an overlap between the predicted stopping area and the risk area, it indicates that the lowering gate may strike the train, and thus a gate valve closing command is issued; if the section operation control system determines that there is no overlap between the predicted stopping area and the risk area, it indicates that the lowering gate will not strike the train, and thus a gate valve opening command is issued.

In an embodiment of the present invention, position information, speed information, and a traction speed curve of the train are acquired, when a gate lowering request is acquired; and a predicted stopping area is determined according to the position information, the speed information, and the traction speed curve; and a gate valve action command is issued further according to a positional relationship between the predicted stopping area and a risk area. According to the above technical solution, whether the train will stop in the risk area before the gate is lowered is determined, and the gate is controlled to lower only when the stopping area is outside the risk area. This can effectively prevent the gate from striking the train, reduce occurrence of safety accidents, and improve safety of rail transit.

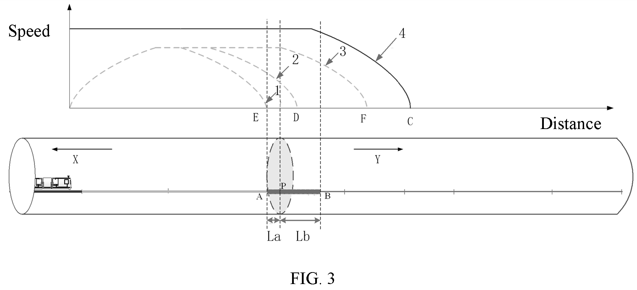

On the basis of the above embodiment, this embodiment adds steps before the acquiring position information, speed information, and a traction speed curve of a train, when a gate lowering request is acquired. FIG. 2 is a flow chart of a second control method for a gate valve of a low-vacuum pipeline transportation system provided according to an embodiment of the present invention. FIG. 3 is a diagram of a first train running and braking process provided according to an embodiment of the present invention. As shown in FIG. 2, the method includes the following steps:

S200. acquiring a front endpoint and a rear endpoint of the risk area.

Specifically, as shown in FIG. 3, point P is the gate position, and the area where a collision between the lowering gate and the train may occur, i.e., the risk area, is between front endpoint A and rear endpoint B. The direction from the front endpoint A to the rear endpoint B is the running direction of the train.

S210, acquiring position information, speed information, and a traction speed curve of a train, when a gate lowering request is acquired.

S220. determining a predicted stopping area according to the position information, the speed information, and the traction speed curve.

S230. issuing a gate valve action command according to a positional relationship between the predicted stopping area and a risk area.

In an embodiment of the present invention, position information, speed information, and a traction speed curve of a train are acquired, when a gate lowering request is acquired. Prior to this, the front endpoint and rear endpoint of the risk area are acquired to clarify the scope of the risk area, facilitating subsequent determination on whether the train will stop in the risk area, so as to prevent the gate from striking the train, reduce the occurrence of safety accidents, and improve the safety of rail transit.

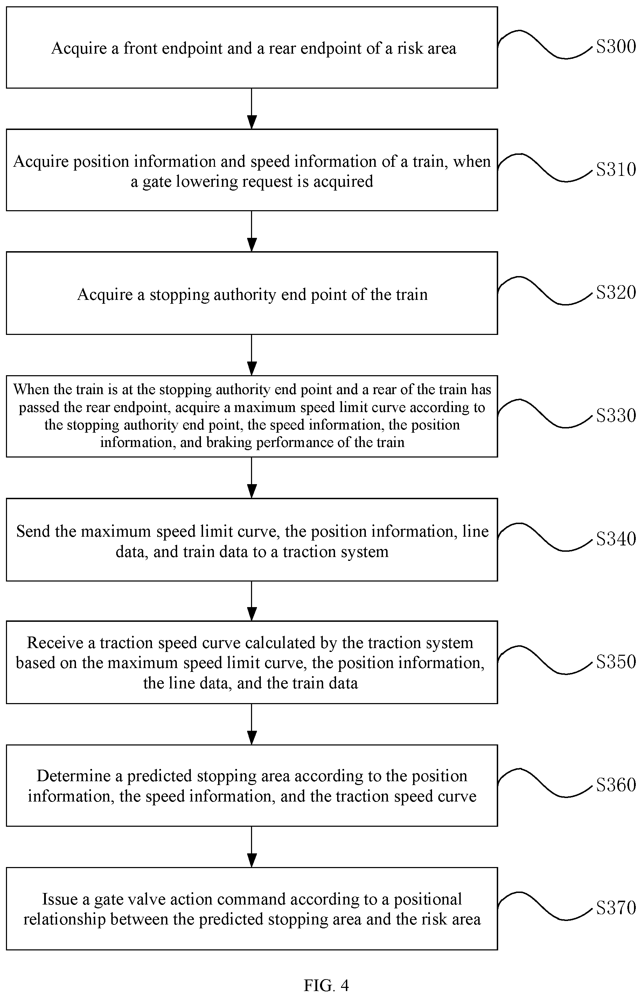

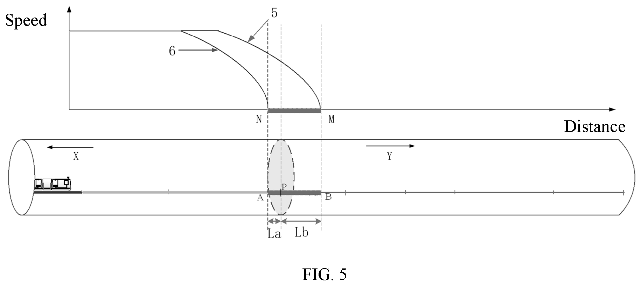

On the basis of the above embodiment, this embodiment explains how to acquire the traction speed curve. FIG. 4 is a flow chart of a third control method for a gate valve of a low-vacuum pipeline transportation system provided according to an embodiment of the present invention. FIG. 5 is a diagram of a second train running and braking process provided according to an embodiment of the present invention. As shown in FIG. 4, the control method includes the following steps:

S300. acquiring a front endpoint and a rear endpoint of the risk area.

S310, acquiring position information and speed information of a train, when a gate lowering request is acquired.

S320, acquiring a movement authority end point of the train.

Specifically, the movement authority end point of the train refers to the farthest position that the train is allowed to reach in the low-vacuum pipeline transportation system. As shown in FIG. 5, the horizontal axis of the coordinate system represents distance, and the vertical axis represents speed. The curve denotes the maximum speed limit curve, and the intersection point of the curve with the horizontal axis indicates the farthest position that the train is allowed to travel to. Exemplarily, with reference to curve 5, the intersection point of curve 5 with the horizontal axis is point M. If the rear of the train passes the rear endpoint B when the train is at point M, the stopping authority end point can be set as point B. With reference to curve 6, the intersection point of curve 6 with the horizontal axis is point N. If the front of the train reaches the front endpoint A when the train is at point N, the stopping authority end point can be set as point A. In addition, it should be noted that the train movement authority mechanism effectively ensures that the movement authority end point does not fall within the risk area through functions such as high-precision positioning, continuous two-way communication, and automatic protection. Based on the train movement authority mechanism, the intersection point of the maximum speed limit curve with the horizontal axis, i.e., the stopping authority end point, will not fall between the front endpoint A and rear endpoint B of the risk area.

S330. when the train is at the stopping authority end point and a rear of the train has passed the rear endpoint, acquiring a maximum speed limit curve according to the movement authority end point, the speed information, the position information, and braking performance of the train.

Exemplarily, as shown in FIG. 5 and with reference to curve 5, the movement authority end point of the train can be set as the rear endpoint B at this time. That is to say, the maximum distance the train is allowed to travel includes the risk area, so the train may stop between the front endpoint A and the rear endpoint B of the risk area during actual operation. Based on the above situation, it is necessary to determine whether the train will stop in the risk area.

With reference to curve 6, the movement authority end point of the train can be set as the front endpoint A at this time. In other words, the maximum distance the train is allowed to travel can only reach the front endpoint A, and there is no possibility that the train will stop between the front endpoint A and the rear endpoint B of the risk area during actual operation. In this case, it is not necessary to determine whether the train will stop in the risk area.

As shown in FIG. 3, the horizontal axis of the coordinate system represents distance, and the vertical axis represents speed. The curve denotes the maximum speed limit curve, which is the maximum allowable speed at which the train can travel at any position. The intersection point of curve 4 with the horizontal axis indicates the maximum distance the train is allowed to travel. With reference to curve 4, the intersection point C of curve 4 with the horizontal axis is behind the rear endpoint B. That is to say, the movement authority end point of the train can be set as C. When the train is at the movement authority end point C, the rear of the train passes the rear endpoint. At this time, the section operation control system acquires the maximum speed limit curve according to the movement authority end point, the speed information, the position information, and braking performance of the train. The maximum speed limit curve is the maximum allowable speed at which the train can travel at any position.

S340. sending the maximum speed limit curve, the position information, line data, and train data to a traction system.

Further, after the section operation control system calculates the maximum speed limit curve, it sends the maximum speed limit curve, position information, line data, and train data to the traction system, so that the traction system can provide feedback based on the above information. The line data includes gradient and radius of curvature. The gradient refers to the rate of change in height of the pipeline bottom relative to the horizontal plane. The radius of curvature refers to the physical degree of curvature of the pipeline track curve. The train data refers to parameters such as the length and weight of the train.

S350. receiving the traction speed curve calculated by the traction system based on the maximum speed limit curve, the position information, the line data, and the train data.

Specifically, after receiving information such as the maximum speed limit curve, position information, line data, and train data sent by the section operation control system, the traction system calculates the traction speed curve based on the above information and feeds it back to the section operation control system, so that the section operation control system can subsequently predict the stopping area of the train.

S360. determining a predicted stopping area according to the position information, the speed information, and the traction speed curve.

S370. issuing a gate valve action command according to a positional relationship between the predicted stopping area and a risk area.

In an embodiment of the present invention, the movement authority end point of the train is first acquired. When the train is at the movement authority end point and the rear of the train has passed the rear endpoint, it is determined that the train will pass through the risk area during operation, and at this time, it is necessary to determine whether the lowering gate will strike the train. Further, the maximum speed limit curve is obtained according to the movement authority end point of the train, speed information, position information, and braking performance. The maximum speed limit curve, position information, line data, and train data are then sent to the traction system to obtain the traction speed curve calculated by the traction system based on the maximum speed limit curve, position information, line data, and train data. This facilitates subsequent determination on whether the train will stop in the risk area, so as to prevent the gate from striking the train, reduce the occurrence of safety accidents, and improve the safety of rail transit.

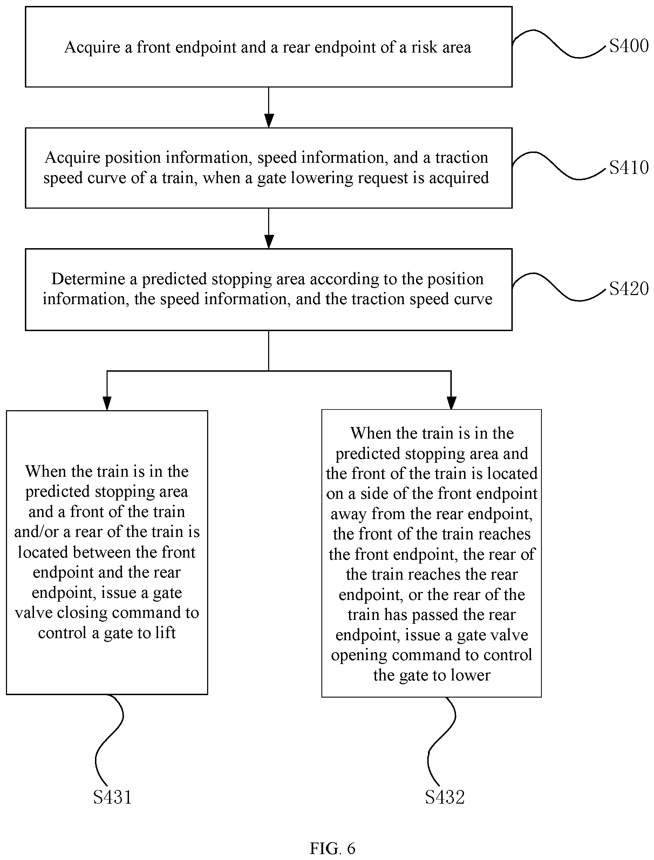

The embodiment of the present invention further refines how to issue gate valve action commands according to the positional relationship between the predicted stopping area and the risk area. FIG. 6 is a flow chart of a fourth control method for a gate valve of a low-vacuum pipeline transportation system provided according to an embodiment of the present invention. As shown in FIG. 6, the control method includes the following steps: S400. acquiring a front endpoint and a rear endpoint of the risk area.

S410, acquiring position information, speed information, and a traction speed curve of a train, when a gate lowering request is acquired.

S420. determining a predicted stopping area according to the position information, the speed information, and the traction speed curve.

S431. when the train is in the predicted stopping area and a front of the train and/or a rear of the train is located between the front endpoint and the rear endpoint, issuing a gate valve closing command to control the gate to lift.

Specifically, as shown in FIG. 3, curve 1, curve 2, and curve 3 represent traction speed curves. The intersection points of curve 1, curve 2, and curve 3 with the horizontal axis represent predicted stopping points. The predicted stopping area refers to the area occupied by the train body when the train is at the predicted stopping point. Exemplarily, with reference to curve 2, the intersection point of curve 2 with the horizontal axis is point D. The predicted stopping point D of the train is located between the front endpoint A and the rear endpoint B. When the train is located in the predicted stopping area corresponding to point D, the following scenarios exist: 1) the front of the train is located between the front endpoint A and the rear endpoint B; 2) both the front and rear of the train are located between the front endpoint A and the rear endpoint B; and 3) the rear of the train is located between the front endpoint A and the rear endpoint B. All the above three scenarios indicate that there is an overlap between the predicted stopping area and the risk area, and the lowering gate will strike the train. Based on this, the section operation control system issues a gate valve closing command to control the gate to remain lifted.

S432. when the train is in the predicted stopping area and the front of the train is located on a side of the front endpoint away from the rear endpoint, the front of the train reaches the front endpoint, the rear of the train reaches the rear endpoint, or the rear of the train has passed the rear endpoint, issuing a gate valve opening command to control the gate to lower.

Exemplarily, as shown in FIG. 3 and with reference to curve 1, the intersection point of curve 1 with the horizontal axis is point E, and point E corresponds to the front endpoint A. When the train is located in the predicted stopping area corresponding to point E, the following scenarios exist: 1) the front of the train is located on the side of the front endpoint A away from the rear endpoint B, that is, the front of the train has not reached the front endpoint A; and 2) the front of the train has just reached the front endpoint A. With reference to curve 3, the intersection point of curve 3 with the horizontal axis is point F, and point F corresponds to the rear endpoint B. When the train is located in the predicted stopping area corresponding to point F, the following scenarios exist: 1) the rear of the train has reached the rear endpoint B; and 2) the rear of the train has passed the rear endpoint B. All the above scenarios indicate that there is no overlap between the predicted stopping area and the risk area, and the lowering gate will not strike the train. Based on this, the section operation control system issues a gate valve opening command to control the gate to lower.

In an embodiment of the present invention, by means of the positional relationship between the train in the predicted stopping area and the front endpoint as well as the rear endpoint, it can accurately determine whether the lowering gate will strike the train, further preventing the gate from striking the train, reducing the occurrence of safety accidents, and improving the safety of rail transit.

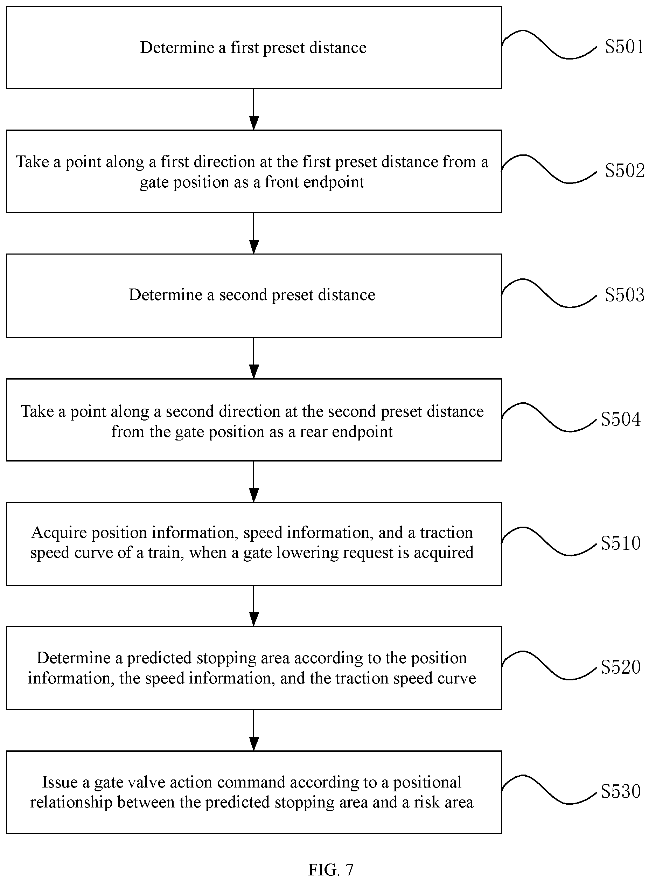

This embodiment explains how to acquire the front endpoint and rear endpoint of the risk area. FIG. 7 is a flow chart of a fifth control method for a gate valve of a low-vacuum pipeline transportation system provided according to an embodiment of the present invention. As shown in FIG. 7, the flow chart of the control method includes the following steps:
S501. determining a first preset distance.

Optionally, the determination of the first preset distance includes: taking the preset safety distance between the front of the train and the gate when the train stops as the first preset distance.

Specifically, as shown in FIG. 3, La represents the first preset distance. The preset safety distance refers to the reserved safety distance between the front of the train and the gate when the train stops.

S502, taking a point along a first direction at a first preset distance from a gate position as the front endpoint.

The first direction refers to the direction from the front of the train to the rear of the train.

Specifically, as shown in FIG. 3, the first direction X is the direction from the front of the train to the rear of the train, and the point along the first direction X that is at the first preset distance La from the gate position P is the front endpoint, i.e., point A.

S503. determining a second preset distance.

Optionally, the determination of the second preset distance includes: acquiring the maximum running speed and braking acceleration of the train; determining the second preset distance according to the maximum running speed and braking acceleration of the train.

Specifically, as shown in FIG. 3, the second preset distance is Lb. The second preset distance Lb may be the emergency braking distance of the train, which can be calculated according to the following formula: $s = \dfrac{-V^2}{2a}$ . s is the emergency braking distance of the train, V is the initial speed of the train, and a is the braking acceleration of the train. The initial speed of the train may be the maximum running speed of the train. When acquiring the braking acceleration of the train, it is necessary to comprehensively consider the influence of resistance and gradient to ensure the accuracy of the calculation of the emergency braking distance of the train.

It should be noted that the second preset distance Lb can be either the emergency braking distance of the train or the length of the train. When the emergency braking distance of the train is greater than the length of the train, the emergency braking distance of the train is taken as the second preset distance; when the emergency braking distance of the train is less than the length of the train, the length of the train is taken as the second preset distance.

S504, taking a point along a second direction at a second preset distance from the gate position as the rear endpoint. The second direction refers to the direction from the rear of the train to the front of the train.

Specifically, as shown in FIG. 3, the second direction Y is the direction from the rear of the train to the front of the train, and the point along the second direction Y that is at the second preset distance Lb from the gate position P is the rear endpoint, i.e., point B. The first preset distance is less than the second preset distance.

S510, acquiring position information, speed information, and a traction speed curve of a train, when a gate lowering request is acquired.

S520. determining a predicted stopping area according to the position information, the speed information, and the traction speed curve.

S530. issuing a gate valve action command according to a positional relationship between the predicted stopping area and a risk area.

In an embodiment of the present invention, the front endpoint and rear endpoint of the risk area are determined by confirming the first preset distance and the second preset distance. This facilitates subsequent determination on whether the train will stop in the risk area, so as to prevent the gate from striking the train, reduce the occurrence of safety accidents, and improve the safety of rail transit.

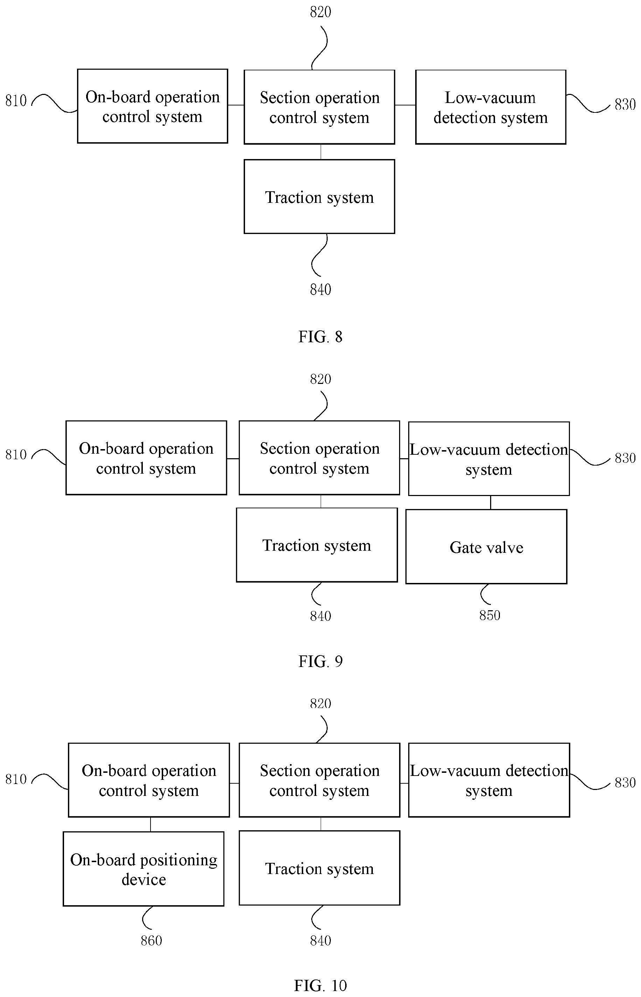

Based on the above inventive concept, FIG. 8 is a structural schematic diagram of a first control system for a gate valve of a low-vacuum pipeline transportation system provided according to an embodiment of the present invention. As shown in FIG. 8, the system includes: an on-board operation control system 810, a section operation control system 820, a low-vacuum detection system 830, and a traction system 840. The section operation control system 820 is connected to the on-board operation control system 810, the low-vacuum detection system 830, and the traction system 840, respectively. The section operation control system 820 is configured to acquire position information, speed information, and a traction speed curve of a train when a gate lowering request is acquired; and is configured to determine a predicted stopping area according to the position information, the speed information, and the traction speed curve; and is further configured to issue a gate valve action command according to a positional relationship between the predicted stopping area and a risk area.

Specifically, the on-board operation control system 810 is responsible for monitoring the running status of the train, including speed and position. The section operation control system 820 can perform efficient data collection and calculation in the low-vacuum pipeline system, and ensure the running safety and stability of the train through advanced data processing and control strategies. In addition, the "section" in the section operation control system 820 means dividing the interior of the pipeline into multiple independent areas through advanced control technologies and equipment in the low-vacuum pipeline transportation system. The low-vacuum detection system 830 can monitor the vacuum degree in the pipeline in real time and control the opening and closing of the gate valve. The traction system 840 is mainly responsible for providing necessary power for the train. It can calculate the traction speed curve according to the information sent by the section operation control system 820, and calculate the input phase, frequency and voltage of the long-stator motor based on the speed, thereby traction the train to run or make the train brake. The section operation control system 820 is connected to the low-vacuum detection system 830 and is configured to receive the gate lowering request sent by the low-vacuum detection system 830. The section operation control system 820 is also connected to the on-board operation control system 810 to obtain position information and speed information. The section operation control system 820 is connected to the traction system 840 to receive the traction speed curve fed back by the traction system 840. The section operation control system 820 can obtain the maximum speed limit curve according to the stopping authority end point, speed information, position information, and braking performance of the train, and send the maximum speed limit curve, position information, line data, and train data to the traction system 840. The traction system 840 can calculate the traction speed curve based on the above information and feed it back to the section operation control system 820. The section operation control system 820 determines the predicted stopping area according to the position information, speed information, and traction speed curve, and then issues a gate valve action command based on the positional relationship between the predicted stopping area and the risk area.

In an embodiment of the present invention, position information, speed information, and a traction speed curve of the train are acquired, when a gate lowering request is acquired by the section operation control system; and a predicted stopping area is determined according to the position information, the speed information, and the traction speed curve; and a gate valve action command is issued further according to a positional relationship between the predicted stopping area and a risk area. According to the above technical solution, whether the train will stop in the risk area before the gate is lowered is determined, and the gate is controlled to lower only when the stopping area is outside the risk area. This can effectively prevent the gate from striking the train, reduce occurrence of safety accidents, and improve safety of rail transit.

Optionally, FIG. 9 is a structural schematic diagram of a second control system for a gate valve of a low-vacuum pipeline transportation system provided according to an embodiment of the present invention. As shown in FIG. 9, the system further includes: a gate valve 850. The low-vacuum detection system 830 is connected to the section operation control system 820 and the gate valve 850 respectively. The low-vacuum detection system 830 is configured to receive the gate valve action command issued by the section operation control system 820 and output a control signal to the gate valve 850 according to the gate valve action command to control the opening and closing of the gate valve 850.

Specifically, the low-vacuum detection system 830 can send a gate lowering request to the section operation control system 820. When the section operation control system 820 determines that the gate will not strike the train, it sends a gate valve opening command to the low-vacuum detection system 830. The low-vacuum detection system 830 outputs a gate opening signal to the gate valve 850 according to the gate valve opening command to control the gate valve 850 to open, thereby lowering the gate. Conversely, when the section operation control system 820 determines that the gate will strike the train, it sends a gate valve closing command to the low-vacuum detection system 830. The low-vacuum detection system 830 outputs a gate closing signal to the gate valve 850 according to the gate valve closing command to control the gate valve 850 to close, thereby lifting the gate.

In an embodiment of the present invention, the low-vacuum detection system responds to the command issued after the determination of the section operation control system to control the opening and closing of the gate valve, so that the gate valve is lowered or lifted. This further prevents the gate from striking the train, reduces the occurrence of safety accidents, and improves the safety of rail transit.

Optionally, FIG. 10 is a structural schematic diagram of a third control system for a gate valve of a low-vacuum pipeline transportation system provided according to an embodiment of the present invention. As shown in FIG. 10, the system includes: an on-board positioning device 860. The on-board operation control system 810 is connected to the on-board positioning device 860 and the section operation control system 820 respectively. The on-board operation control system 810 is configured to receive the position information and speed information obtained by the on-board positioning device 860 and send the position information and speed information to the section operation control system 820.

Specifically, the on-board positioning device 860 can provide the position information and speed information of the train in real-time. The on-board positioning device 860 is connected to the on-board operation control system 810 and transmits the position information and speed information of the train to the on-board operation control system 810 in real-time. The on-board operation control system 810 is connected to the section operation control system 820 and sends the position information and speed information to the section operation control system 820 through wireless communication.

In an embodiment of the present invention, the on-board positioning device accurately acquires the position information and speed information of the train, which lays a foundation for the subsequent determination of whether the train will stop in the risk area.

It should be understood that the various forms of flows shown above may be used, with steps reordered, added or deleted. For example, the steps described in the present invention may be performed in parallel, sequentially, or in different orders, as long as the desired results of the technical solutions of the present invention can be achieved, which is not limited herein.

The above specific implementations do not constitute a limitation on the scope of protection of the present invention. It should be understood by those skilled in the art that various modifications, combinations, subcombinations, and substitutions can be made according to design requirements and other factors. Any modifications, equivalent substitutions, improvements, etc. made within the spirit and principles of the present invention shall all be included within the scope of protection of the present invention.

**Claims**

1. A control method for a gate valve of a low-vacuum pipeline transportation system, **characterized by** comprising:

   acquiring position information, speed information, and a traction speed curve of a train, when a gate lowering request is acquired;
   determining a predicted stopping area according to the position information, the speed information, and the traction speed curve; and
   issuing a gate valve action command according to a positional relationship between the predicted stopping area and a risk area;
   wherein the risk area refers to an area where collision with the train occurs when the gate valve is opened to control a gate to lower.

2. The control method according to claim 1, **characterized in that** before the acquiring position information, speed information, and a traction speed curve of a train, when a gate lowering request is acquired, the method further comprises:

acquiring a front endpoint and a rear endpoint of the risk area, and a direction from the front endpoint to the rear endpoint is a running direction of the train.

3.  The control method according to claim 2, **characterized by** comprising: acquiring the traction speed curve, comprising;

    acquiring a movement authority end point of the train;
    when the train is at the stopping authority end point and a rear of the train has passed the rear endpoint, acquiring a maximum speed limit curve according to the movement authority end point, the speed information, the position information, and braking performance of the train;
    sending the maximum speed limit curve, the position information, line data, and train data to a traction system; and
    receiving the traction speed curve calculated by the traction system based on the maximum speed limit curve, the position information, the line data, and the train data.

4.  The control method according to claim 2, **characterized in that** the issuing a gate valve action command according to a positional relationship between the predicted stopping area and a risk area comprises:

    when the train is in the predicted stopping area and a front of the train and/or a rear of the train is located between the front endpoint and the rear endpoint, issuing a gate valve closing command to control the gate to lift; and
    when the train is in the predicted stopping area and the front of the train is located on a side of the front endpoint away from the rear endpoint, the front of the train reaches the front endpoint, the rear of the train reaches the rear endpoint, or the rear of the train has passed the rear endpoint, issuing a gate valve opening command to control the gate to lower.

5.  The control method according to claim 2, **characterized in that** the acquiring a front endpoint and a rear endpoint of the risk area comprises:

    determining a first preset distance;
    taking a point along a first direction at a first preset distance from a gate position as the front endpoint; wherein the first direction refers to a direction from a front of the train to a rear of the train;
    determining a second preset distance; and
    taking a point along a second direction at a second preset distance from the gate position as the rear endpoint; wherein the second direction refers to a direction from the rear of the train to the front of the train;
wherein the first preset distance is less than the second preset distance.

6.  The control method according to claim 5, **characterized in that** the determining a first preset distance comprises:
    taking a preset safety distance between the front of the train and the gate when the train stops as the first preset distance.

7.  The control method according to claim 5, **characterized in that** the determining a second preset distance comprises:

    acquiring a maximum running speed and a braking acceleration of the train; and
    determining the second preset distance according to the maximum running speed and the braking acceleration of the train.

8.  A control system for a gate valve of a low-vacuum pipeline transportation system, **characterized by** comprising: an on-board operation control system, a section operation control system, a low-vacuum detection system, and a traction system;
    wherein the section operation control system is connected to the on-board operation control system, the low-vacuum detection system, and the traction system, respectively; the section operation control system is configured to acquire position information, speed information, and a traction speed curve of a train when a gate valve lowering request is acquired; and is configured to determine a predicted stopping area according to the position information, the speed information, and the traction speed curve; and is further configured to issue a gate valve action command according to a positional relationship between the predicted stopping area and a risk area.

9.  The control system according to claim 8, **characterized by** further comprising: a gate valve;
    wherein the low-vacuum detection system is connected to the section operation control system and the gate valve, respectively, and the low-vacuum detection system is configured to receive the gate valve action command issued by the section operation control system and output a control signal to the gate valve according to the gate valve action command to control opening and closing of the gate valve.

10. The control system according to claim 8, **characterized by** further comprising: an on-board positioning device;

where the on-board operation control system is connected to the on-board positioning device and the section operation control system, respectively, and the on-board operation control system is configured to receive the position information and the speed information acquired by the on-board positioning device and send the position information and the speed information to the section operation control system.

Acquire position information, speed information, and a traction speed curve of a train, when a gate lowering request is acquired — S110

Determine a predicted stopping area according to the position information, the speed information, and the traction speed curve — S120

Issue a gate valve action command according to a positional relationship between the predicted stopping area and a risk area — S130

FIG. 1

Acquire a front endpoint and a rear endpoint of a risk area — S200

Acquire position information, speed information, and a traction speed curve of a train, when a gate lowering request is acquired — S210

Determine a predicted stopping area according to the position information, the speed information, and the traction speed curve — S220

Issue a gate valve action command according to a positional relationship between the predicted stopping area and the risk area — S230

FIG. 2

FIG. 3

Acquire a front endpoint and a rear endpoint of a risk area — S300

Acquire position information and speed information of a train, when a gate lowering request is acquired — S310

Acquire a stopping authority end point of the train — S320

When the train is at the stopping authority end point and a rear of the train has passed the rear endpoint, acquire a maximum speed limit curve according to the stopping authority end point, the speed information, the position information, and braking performance of the train — S330

Send the maximum speed limit curve, the position information, line data, and train data to a traction system — S340

Receive a traction speed curve calculated by the traction system based on the maximum speed limit curve, the position information, the line data, and the train data — S350

Determine a predicted stopping area according to the position information, the speed information, and the traction speed curve — S360

Issue a gate valve action command according to a positional relationship between the predicted stopping area and the risk area — S370

FIG. 4

FIG. 5

Acquire a front endpoint and a rear endpoint of a risk area — S400

Acquire position information, speed information, and a traction speed curve of a train, when a gate lowering request is acquired — S410

Determine a predicted stopping area according to the position information, the speed information, and the traction speed curve — S420

When the train is in the predicted stopping area and a front of the train and/or a rear of the train is located between the front endpoint and the rear endpoint, issue a gate valve closing command to control a gate to lift

S431

When the train is in the predicted stopping area and the front of the train is located on a side of the front endpoint away from the rear endpoint, the front of the train reaches the front endpoint, the rear of the train reaches the rear endpoint, or the rear of the train has passed the rear endpoint, issue a gate valve opening command to control the gate to lower

S432

FIG. 6

| | |
|---|---|
| Determine a first preset distance | S501 |

↓

| | |
|---|---|
| Take a point along a first direction at the first preset distance from a gate position as a front endpoint | S502 |

↓

| | |
|---|---|
| Determine a second preset distance | S503 |

↓

| | |
|---|---|
| Take a point along a second direction at the second preset distance from the gate position as a rear endpoint | S504 |

↓

| | |
|---|---|
| Acquire position information, speed information, and a traction speed curve of a train, when a gate lowering request is acquired | S510 |

↓

| | |
|---|---|
| Determine a predicted stopping area according to the position information, the speed information, and the traction speed curve | S520 |

↓

| | |
|---|---|
| Issue a gate valve action command according to a positional relationship between the predicted stopping area and a risk area | S530 |

FIG. 7

820

| On-board operation control system | Section operation control system | Low-vacuum detection system |
|---|---|---|

810

830

Traction system

840

FIG. 8

820

| On-board operation control system | Section operation control system | Low-vacuum detection system |
|---|---|---|

810

830

| Traction system | Gate valve |
|---|---|

840

850

FIG. 9

820

| On-board operation control system | Section operation control system | Low-vacuum detection system |
|---|---|---|

810

830

| On-board positioning device | Traction system |
|---|---|

860

840

FIG. 10

# INTERNATIONAL SEARCH REPORT

| International application No. |
| --- |
| **PCT/CN2024/134648** |

| A. | CLASSIFICATION OF SUBJECT MATTER |
| --- | --- |

B61L23/00(2006.01)i; B61L27/40(2022.01)n; B61B13/10(2006.01)n

According to International Patent Classification (IPC) or to both national classification and IPC

| B. | FIELDS SEARCHED |
| --- | --- |

Minimum documentation searched (classification system followed by classification symbols)

IPC:B61L B61B

Documentation searched other than minimum documentation to the extent that such documents are included in the fields searched

Electronic data base consulted during the international search (name of data base and, where practicable, search terms used)

CNABS; CNTXT; CNKI; IEEE; VEN; USTXT; WOTXT; GBTXT; JPTXT; EPTXT; ENTXTC: 北京全路通信, 姚文华, 崔俊锋, 贾云光, 刘岭, 曲博, 唐昭, 真空, 管道, 闸板, 阀, 位置, 速度, 车速, 停车, 方向, 撞, 曲线, vacuum, pipeline, gate, valve, flashboard, park+, stop+, locat+, position+, direction, collid+, speed, velocity, curve

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 118810863 A (CRSC RESEARCH & DESIGN INSTITUTE GROUP CO., LTD.) 22 October 2024 (2024-10-22)<br>description, paragraphs [0006]-[0119], and figures 1-10 | 1-10 |
| X | CN 114802355 A (CASIC FEIHANG TECHNOLOGY RESEARCH INSTITUTE (CASIA HAIYING MECHANICAL AND ELECTRONIC RESEARCH INSTITUTE)) 29 July 2022 (2022-07-29)<br>description, paragraphs [0004]-[0087], and figures 1 and 2 | 1-10 |
| A | CN 116062005 A (CASIC FEIHANG TECHNOLOGY RESEARCH INSTITUTE (CASIA HAIYING MECHANICAL AND ELECTRONIC RESEARCH INSTITUTE)) 05 May 2023 (2023-05-05)<br>entire document | 1-10 |
| A | CN 118331093 A (CRSC RESEARCH & DESIGN INSTITUTE GROUP CO., LTD.) 12 July 2024 (2024-07-12)<br>entire document | 1-10 |

| ✓ Further documents are listed in the continuation of Box C. | ✓ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **03 June 2025** | **09 June 2025** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/134648** |

### C. DOCUMENTS CONSIDERED TO BE RELEVANT

| Category* | Citation of document, with indication, where appropriate, of the relevant passages | Relevant to claim No. |
| --- | --- | --- |
| A | US 2021213985 A1 (HYPERLOOP TECHNOLOGIES, INC.) 15 July 2021 (2021-07-15) entire document | 1-10 |

Form PCT/ISA/210 (second sheet) (July 2022)

**INTERNATIONAL SEARCH REPORT**
Information on patent family members

International application No.

**PCT/CN2024/134648**

| Patent document cited in search report | | | Publication date (day/month/year) | Patent family member(s) | Publication date (day/month/year) |
|---|---|---|---|---|---|
| CN | 118810863 | A | 22 October 2024 | None | |
| CN | 114802355 | A | 29 July 2022 | None | |
| CN | 116062005 | A | 05 May 2023 | None | |
| CN | 118331093 | A | 12 July 2024 | None | |
| US | 2021213985 | A1 | 15 July 2021 | None | |

Form PCT/ISA/210 (patent family annex) (July 2022)